Europäisches Patentamt

European Patent Office

Office européen des brevets

(11) Veröffentlichungsnummer : **0 045 899**
**B1**

(12) # EUROPÄISCHE PATENTSCHRIFT

(45) Veröffentlichungstag der Patentschrift :
25.07.84

(51) Int. Cl.³ : **G 01 N 21/91**

(21) Anmeldenummer : 81105962.5

(22) Anmeldetag : 29.07.81

(54) **Testkörper zur Überprüfung der Anzeigeempfindlichkeit eines Eindringstoffprüfmittels.**

(30) Priorität : 09.08.80 DE 3030280

(43) Veröffentlichungstag der Anmeldung :
17.02.82 Patentblatt 82/07

(45) Bekanntmachung des Hinweises auf die Patenterteilung : 25.07.84 Patentblatt 84/30

(84) Benannte Vertragsstaaten :
BE DE FR GB IT LU NL SE

(56) Entgegenhaltungen :
US-A- 3 164 006
US-A- 3 791 198
US-A- 3 958 119
R.C. McMASTER: "Nondestructive testing handbook", Band 1, 1959, Seiten 7.26 - 7.28 The Ronald Press Company, New York, U.S.A. Section 7: "Liquid-penetrant test equipment - Control of penetrant materials"

(73) Patentinhaber : **MTU MOTOREN- UND TURBINEN-UNION MÜNCHEN GMBH**
Dachauer Strasse 665 Postfach 50 06 40
D-8000 München 50 (DE)

(72) Erfinder : **Dickhaut, Eberhard**
Oberanger 12
D-8061 Grossinzemoos (DE)

EP 0 045 899 B1

## Beschreibung

Die vorliegende Erfindung bezieht sich auf einen mit Haarrissen versehenen Testkörper zur Überprüfung der Anzeigeempfindlichkeit eines Eindringstoffprüfmittels.

Es sind Verfahren zur Rißprüfung von Werkstücken bekannt, bei denen das Werkstück in ein Eindringstoffprüfmittel, welches üblicherweise ein mit fluoreszierendem Farbstoff versehenes dünnflüssiges Mineral ist, eingetaucht werden, danach das an der Oberfläche haftende Eindringstoffprüfmittel vollständig abgewaschen wird und das Werkstück dann unter Lichteinwirkung betrachtet wird. Aufgrund der Kapillarwirkung von in der Oberfläche vorhandener Rissen verbleibt selbst bei intensivem Abwaschen der Werkstückoberfläche darin Eindringstoffprüfmittel haften, welches dann unter Lichteinwirkung den Verlauf der Risse und deren Größe gut sichtbar werden läßt. Die Helligkeit und damit die Sichtbarkeit der Risse hängt dabei von der Anzeigeempfindlichkeit des Prüfmittels ab, die je nach Konzentration des Farbstoffes im Öl größer oder kleiner ist. Um vergleichbare, reproduzierbare Ergebnisse bei der Rißprüfung erhalten zu können, ist es notwendig, die Anzeigeempfindlichkeit des verwendeten Prüfmittels genau zu kennen, d. h. zu wissen, welche Rißbreite bei Verwendung des Eindringstoffprüfmittels gerade noch sichtbar angezeigt wird. Aus diesem Grund müssen die zur Verwendung kommenden Prüfmittel auf ihre Anzeigeempfindlichkeit hin geprüft werden. Bisher werden hierzu wahllos zur Verfügung stehende Werkstücke als Testkörper verwendet, was verständlicherweise eine standardisierte Prüfung nicht zuläßt und darüberhinaus häufig nur Zufallsergebnisse liefert.

Aus « Nondestructive testing handbook », R.C. McMASTER, Band 1, 1959, Seiten 7.26-7.28, The Ronald Press Company, New York, U.S.A., Section 7 : « Liquid-penetrant test equipment — Control of penetrant materials » ist es bekannt, Prüfmittel für die Rißprüfung mit Hilfe von Testkörpern auf ihre Empfindlichkeit hin zu überprüfen. Bei dem vorkannten Prüfungsverfahren werden Aluminiumtestkörper verwendet, in die mittels Thermoschock Risse eingebracht wurden, wobei auf demselben Testkörper auf eine erste Zone frisches, unbenutztes Prüfmittel und auf eine zweite, danebenliegende Zone benutztes Prüfmittel aufgebracht wird und die Sichtbarkeit der über beide Zonen durchlaufenden Risse verglichen wird. Es hat sich gezeigt, daß mit dieser Methode nur eine verhältnismäßig grobe Prüfung des Prüfmittels erreichbar ist, da die auf dem Aluminiumtestkörper erzeugbaren Risse relativ groß sind.

Aus der US-A-37 91 198 ist es bekannt, einen metallischen Testkörper zur Prüfung der Empfindlichkeit von Rißprüfungsmittel einzusetzen. Dabei werden auf diesem Testkörper durch mechanische Beanspruchung in großer Anzahl auftretende Risse erzeugt. Die Verteilung und Größe der Risse ist dabei nicht zu beeinflussen, lediglich wird bei dem bekannten Verfahren darauf geachtet, daß Risse etwa im Bereich von 0,5 μm bis 20 μm entstehen. Wegen der großen Häufigkeit und unterschiedlichen Größe der Risse ist eine meßtechnische Empfindlichkeitseinstufung mit diesem Problem nur schwer möglich. Es kann dabei nur eine relativ grobe Qualitätsbeurteilung des Rißprüfungsmittels vorgenommen werden.

Der vorliegenden Erfindung liegt die Aufgabe, zugrunde einen Testkörper zu schaffen, der eine standardisierte genaue Prüfung zuläßt, wobei der Testkörper möglichst leicht handhabbar sein soll und darüber hinaus die Herstellkosten des Testkörpers gering gehalten werden sollen.

Zur Lösung dieser Aufgabe soll ein Testkörper erfindungsgemäß die Merkmale des kennzeichnenden Teils des Anspruchs 1 aufweisen.

Die Erfindung geht dabei von der Erkenntnis aus, daß bei Aufreißen einer Oberflächenschicht an einem Werkstück die Breite des an der Oberfläche entstehenden Spaltes abhängig ist von der Schichtstärke, da der entstehende Riß eine sich nach außen öffnende Keilform aufweist. Je dicker also die Schicht desto breiter der an der Oberfläche entstehende Spalt. Durch die unterschiedlich dicken nebeneinander angeordneten Nickelschichten werden also bei elastischer Verformung unterschiedlich breite Risse erzeugt, wobei der Unterschied in der Rißbreite proportional ist dem Unterschied in der Schichtstärke der Nickelschichten. Auf diese Weise lassen sich planmäßig Risse mit nur sehr geringen Breitendifferenzen erzeugen. Diese Risse werden unter dem Mikroskop ausgemessen, und es wird dann nach Anwendung des eingangs beschriebenen Prüfverfahrens festgestellt, in welcher der nebeneinanderliegenden Nickelschichten bei der optischen Prüfung gerade noch sichtbare Risse angezeigt werden. Die Anzeigeempfindlichkeit des verwendeten Eindringstoffprüfmittels entspricht dann also der Breite der gerade noch angezeigten Risse.

Aufgrund des einfachen Aufbaus sind die Testkörper mit geringen Kosten herstellbar, so daß es möglich ist, eine Vielzahl von Testkörpern für verschiedene Bereiche von Rißbreiten zu verwenden, ohne dadurch die Prüfkosten zu hoch werden zu lassen. Die Ausbildung der Testkörper gemäß Anspruch 2 dient dem einfachen Nachweis dafür, daß nach dem Eintauchen in das Eindringstoffprüfmittel die Oberfläche der Nickelschichten vollständig abgewaschen ist. Gibt nämlich die die größere Rauhigkeit aufweisende Oberfläche bei der optischen Prüfung keine Lichtreflexe mehr, dann ist das ein Anzeichen dafür, daß diese Oberfläche vollständig gereinigt ist, und daß demnach erst recht die Oberfläche mit geringerer Rauhigkeit frei von Prüfmittel ist, so daß man sichergehen kann, daß alle sichtbaren Linien in der Prüffläche tatsächlich auf Risse zurückzuführen sind.

Zur Erzielung der gewünschten höheren Rauhigkeit ist die nicht beschichtete Zone des Testkörpers vorzugsweise mit Al$_2$O$_3$ gestrahlt. Als Werkstoff für die Grundplatte hat sich X10CrNiTi 189 als besonders vorteilhaft erwiesen.

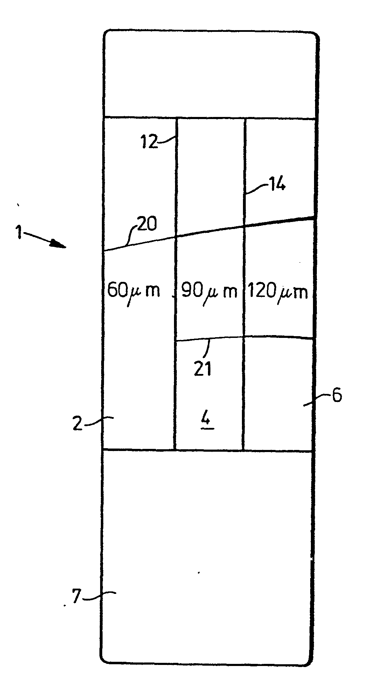

In der beigefügten Zeichnung ist beispielhaft ein erfindungsgemäßer Testkörper dargestellt. Es handelt sich dabei um eine etwa rechteckige Platte in der Größe von etwa 150 × 50 mm. Diese Platte ist in ihrer Gesamtheit mit 1 bezeichnet. Die aus austenitischem Stahl bestehende Platte 1 weist etwa eine Dicke von 2,5 mm auf. Ein unterer mit 7 bezeichneter Abschnitt der Platte 1 ist rißfrei gehalten und mit rauher Oberfläche versehen. Die übrige Plattenfläche ist mit Nickel beschichtet, wobei beim dargestellten Ausführungsbeispiel 3 unterschiedlich dick beschichtete zonen 2, 4, 6 vorgesehen sind, die gegeneinander durch sichtbare Grenzen 12, 14 abgeteilt sind. Im dargestellten Ausführungsbeispiel soll der Streifen 2 eine Nickelschichtdicke von 60 μm aufweisen, der Streifen 4 eine solche Dicke von 90 μm und der Streifen 6 eine Dicke von 120 μm. Es sind jedoch auch größer oder feiner abgestufte Schichtdicken möglich. Selbstverständlich ist es auch möglich, mehr als drei Streifen unterschiedlicher Nickelschichten nebeneinander anzuordnen.

Zur Veranschaulichung eines Prüfergebnisses, welches mit Hilfe des Testkörpers erzielbar ist, sind zwei über die ganze Breite des Testkörpers durchlaufende Risse eingezeichnet. Der erste mit dem Bezugszeichen 20 versehene Riß ist in allen drei nickelbeschichteten Streifen sichtbar, wobei allerdings die Sichtbarkeit vom Streifen 2 bis zum Streifen 6 zunimmt, was durch entsprechende Zunahme der Strichstärke von Streifen 2 bis zum Streifen 6 dargestellt ist. Der zweite Riß mit dem Bezugszeichen 21 ist im Bereich des Streifens 2 so dünn, daß er von dem verwendeten Eindringstoffprüfmittel nicht mehr angezeigt werden kann.

## Ansprüche

1. Mit Haarrissen versehener Testkörper zur Überprüfung der Anzeigeempfindlichkeit eines Eindringstoffprüfmittels, dadurch gekennzeichnet, daß der Testkörper aus einer austenitischen Stahlplatte (1) besteht, auf der unter Bildung von sichtbaren Grenzen (12, 14) nebeneinander Nickelschichten (2, 4, 6) unterschiedlicher genau festgelegter Dicke aufgetragen sind und sich durch elastische Verformung des beschichteten Testkörpers entstandene Risse in den Nickelschichten befinden.

2. Testkörper nach Anspruch 1, dadurch gekennzeichnet, daß neben der Ni-beschichteten Fläche noch eine nicht beschichtete, rißfreie Zone (7) auf der Grundplatte vorgesehen ist, deren Rauhigkeit größer ist als die der Ni-beschichteten Fläche.

3. Testkörper nach Anspruch 2, dadurch gekennzeichnet, daß die nicht beschichtete Zone mit Al$_2$O$_3$ gestrahlt ist.

4. Testkörper nach den Ansprüchen 1 bis 3, dadurch gekennzeichnet, daß die Grundplatte (1) aus X10CrNiTi 189 besteht.

## Claims

1. A test body comprising hairline cracks, for testing the indicating sensitivity of a penetrating test medium, characterised in that the test body consists of an austenitic steel plate (1) on which, so as to form visible boundaries (12, 14), adjacently disposed layers of nickel (2, 4, 6) of differing but exactly determined thickness are applied and in that there are in the nickel layers cracks formed by elastic deformation of the coated test body.

2. Test body according to Claim 1, characterised in that in addition to the Ni-coated surface, there is also on the base plate a non-coated crack-free zone (7), the roughness of which is greater than that of the nickel-coated surface.

3. Test body according to Claim 2, characterised in that the non-coated zone is blasted with Al$_2$O$_3$.

4. Test body according to Claims 1 to 3, characterised in that the base plate (1) consists of X10CrNiTi 189.

## Revendications

1. Corps de test muni de fissures capillaires pour le contrôle de la sensibilité d'un indicateur pénétrant, corps de test caractérisé en ce qu'il est constitué d'une plaque d'acier austénétique (1) sur laquelle, en ménageant des limites visibles (12, 14) sont rapportées l'une à côté de l'autre des couches de nickel (2, 4, 6) d'épaisseurs différentes déterminées avec précision, tandis que des fissures obtenues par déformation élastique du corps de test revêtu, sont présentes dans les couches de nickel.

2. Corps de test selon la revendication 1, caractérisé en ce qu'à côté des surfaces revêtues de nickel il est encore prévu sur la plaque de base une zone (7) non revêtue et exempte de fissures, dont la rugosité est plus grande que celle des surfaces revêtues de nickel.

3. Corps de test selon la revendication 2, caractérisé en ce que la zone non revêtue est sablée avec de l'alumine.

4. Corps de test selon les revendications 1 à 3, caractérisé en ce que la plaque de base (1) est constituée de X10CrNiTi 189.